# EUROPÄISCHE PATENTANMELDUNG

(11) **EP 4 389 719 A1**
(43) Veröffentlichungstag der Anmeldung: **26.06.2024**
(21) Anmeldenummer: 23209627.1
(22) Anmeldetag: 14.11.2023
(51) Int. Cl.: C04B 20/10, C04B 14/28, C04B 14/26, C04B 14/06, C04B 26/04, C04B 26/06, C04B 24/42, C04B 111/00, C04B 111/82

(54) **VERFAHREN ZUR HERSTELLUNG EINER PASTÖSEN PUTZMASSE, VERWENDUNG EINER NACH DEM VERFAHREN HERGESTELLTEN PASTÖSEN PUTZMASSE, PASTÖSE PUTZMASSE SOWIE HIERAUS HERGESTELLTE FARBIGE PUTZSCHICHT**

(30) Priorität: 13.12.2022 DE 102022004687
(71) Anmelder: STO SE & Co. KGaA, 79780 Stühlingen (DE)
(72) Erfinder: Hitzler, Martin, 78244 Gottmadingen (DE); Fraunhoffer, Dominik, 78166 Donaueschingen (DE); Sauter, Elisabeth, 78250 Tengen (DE)
(74) Vertreter: Gottschalk, Matthias

(57) **Zusammenfassung**

Die Erfindung betrifft ein Verfahren zur Herstellung einer mindestens ein Farbpigment enthaltenden pastösen Putzmasse, umfassend die Schritte
a) Bereitstellen mindestens eines körnigen und/oder sandigen Füllstoffs und Beschichten zumindest eines Teils des körnigen und/oder sandigen Füllstoffs mit mindestens einem Farbpigment und mindestens einem Bindemittel,
b) Trocknen und/oder Härten der Farbpigment-Bindemittelbeschichtung auf dem Füllstoff,
c) Mischen des gesamten Füllstoffs mit mindestens einem Polymerbindemittel, mindestens einem Hydrophobierungsmittel, weiteren Additiven und Wasser.

Die Erfindung betrifft ferner eine Verwendung einer nach dem Verfahren hergestellten pastösen Putzmasse, eine pastöse Putzmasse sowie eine aus der pastösen Putzmasse hergestellte farbige Putzschicht.

## Beschreibung

Die Erfindung betrifft ein Verfahren zur Herstellung einer pastösen Putzmasse, die mindestens ein Farbpigment enthält, das heißt eingefärbt bzw. getönt ist. Ferner wird eine Verwendung einer nach dem Verfahren hergestellten pastösen Putzmasse vorgeschlagen. Darüber hinaus werden eine pastöse Putzmasse sowie eine hieraus hergestellte farbige Putzschicht angegeben.

### Stand der Technik

Getönte pastöse Putzmassen gelangen sowohl im Innen- als auch im Außenbereich zum Einsatz. Über die Zugabe von Farbpigmenten kann die Farbgebung und damit das Erscheinungsbild einer aus der Putzmasse hergestellten Putzschicht beeinflusst werden. Handelt es sich bei der Putzschicht um eine der Witterung ausgesetzte Außenputzschicht, kann das Erscheinungsbild über die Zeit stark beeinträchtigt werden.

Ein allgemein bekanntes Problem bei farbigen Außenputzschichten, die der Witterung ausgesetzt sind, ist die Bildung von Glanzstreifen. Diese werden häufig auch als "Schneckenspuren" bezeichnet. Je intensiver und/oder dunkler die Farbgebung der Putzschicht ist, desto stärker fällt die durch Schneckenspuren hervorgerufene optische Beeinträchtigung ins Gewicht. Glanzstreifen bzw. Schneckenspuren sind darauf zurückzuführen, dass in der Putzschicht enthaltene wasserlösliche Substanzen, wie beispielsweise Emulgatoren, Netzmittel, Dispergiermittel, Tenside und/oder andere oberflächenaktive Substanzen, durch Regen oder generell Feuchtigkeit ausgewaschen werden. Die ausgewaschenen Substanzen verbleiben an der Oberfläche der Putzschicht und bilden nach dem Trocknen helle, glänzende Ablagerungen aus, die an eine Schneckenspur aus Schneckenschleim erinnern.

Die vorliegende Erfindung ist mit der Aufgabe befasst, das Problem der Glanzstreifenbildung bei farbigen Putzschichten zu verhindern oder zumindest zu verringern.

Zur Lösung der Aufgabe wird das Verfahren nach Anspruch 1 vorgeschlagen. Vorteilhafte Weiterbildungen der Erfindung sind den Unteransprüchen zu entnehmen. Darüber hinaus werden eine Verwendung einer nach einem erfindungsgemäßen Verfahren hergestellten Putzmasse, eine pastöse Putzmasse sowie eine hieraus hergestellte farbige Putzschicht vorgeschlagen.

### Offenbarung der Erfindung

Das vorgeschlagene Verfahren dient der Herstellung einer pastösen Putzmasse, die mindestens ein Farbpigment enthält, das heißt eingefärbt bzw. getönt ist. Das Verfahren umfasst die Schritte:
a) Bereitstellen mindestens eines körnigen und/oder sandigen Füllstoffs und Beschichten zumindest eines Teils des körnigen und/oder sandigen Füllstoffs mit mindestens einem Farbpigment und mindestens einem Bindemittel,
b) Trocknen und/oder Härten der Farbpigment-Bindemittelbeschichtung auf dem Füllstoff,
c) Mischen des gesamten körnigen und/oder sandigen Füllstoffs mit mindestens einem Polymerbindemittel, mindestens einem Hydrophobierungsmittel, weiteren Additiven und Wasser.

Eine Putzschicht, die aus einer nach dem vorgeschlagenen Verfahren hergestellten Putzmasse hergestellt wird, neigt deutlich weniger zur Glanzstreifenbildung als eine Putzschicht, die aus einer Putzmasse hergestellt wird, die nach einem herkömmlichen Verfahren eingefärbt bzw. getönt wird. Dies ist darauf zurückzuführen, dass auf eine aktive Zugabe von oberflächenaktiven Substanzen - soweit möglich - verzichtet wird. Durch die vorgeschlagene Färbetechnik wird zudem die Gefahr minimiert, dass oberflächenaktive Substanzen über eine fertige Pigmentpräparation, beispielsweise eine Pigmentpaste, eingeschleppt werden. Eine Pigmentpaste kann bis zu 40 Gew.-% Netz- und Dispergiermittel bezogen auf das Gesamtgewicht der Pigmentpaste aufweisen. Bei dem vorgeschlagenen Verfahren werden zunächst der körnige und/oder sandige Füllstoff mit mindestens einem Farbpigment und mindestens einem Bindemittel beschichtet, das heißt eingefärbt bzw. getönt, und dann mit den weiteren Ausgangsstoffen zur Herstellung der Putzmasse gemischt. Auf die Zugabe einer fertigen Pigmentpräparation, insbesondere einer Pigmentpaste, kann somit verzichtet werden.

Bevorzugt wird zum Einfärben bzw. Tönen des körnigen und/oder sandigen Füllstoffs eine Farbpigment-Bindemittelmischung eingesetzt. Das heißt, dass vor Schritt a) das mindestens eine Farbpigment und das mindestens eine Bindemittel gemischt und in Schritt a) als Farbpigment-Bindemittelmischung auf zumindest einen Teil des körnigen und/oder sandigen Füllstoffs aufgebracht werden.

Durch vorhergehendes Mischen des mindestens einen Farbpigments und des mindestens einen Bindemittels wird eine gleichmäßige Verteilung des mindestens einen Farbpigments in der Farbpigment-Bindemittelmischung und damit auf dem Füllstoff erreicht, wenn anschließend die Farbpigment-Bindemittelmischung auf den Füllstoff aufgebracht wird. Durch die vorgeschlagene Verwendung einer Farbpigment-Bindemittelmischung wird das mindestens eine Farbpigment auf der Oberfläche des körnigen und/oder sandigen Füllstoffs zudem fest fixiert. Das heißt, dass auch das Farbpigment weniger gut ausgewaschen werden kann, so dass die Farbgebung einer aus der Putzmasse hergestellten Putzschicht langlebig ist.

Durch Einfärben zumindest eines Teils des körnigen und/oder sandigen Füllstoffs kann zudem das Farbpigment effizienter und somit in geringeren Mengen eingesetzt werden. Darüber hinaus ist über den körnigen und/oder sandigen Füllstoff eine gleichmäßige Verteilung des Farbpigments in der Putzmasse sichergestellt. Das heißt, dass - anders als bei herkömmlichen Pigmentpräparationen - keine oberflächenaktiven Substanzen notwendig sind, um eine homogene Verteilung des Farbpigments zu gewährleisten.

Die geringe Neigung zur Glanzstreifenbildung ist jedoch nicht allein auf die vorgeschlagene Färbetechnik zurückzuführen, sondern auch auf die Zugabe eines Hydrophobierungsmittels. Denn das zugegebene Hydrophobierungsmittel reduziert die Wasseraufnahme einer aus der Putzmasse hergestellten Putzschicht, so dass weniger Wasser bzw. Feuchtigkeit vorhanden ist, um oberflächenaktive Substanzen zu lösen und auszuwaschen. Dies ist insbesondere von Bedeutung, da nicht immer auf die Zugabe von oberflächenaktiven Substanzen verzichtet werden kann und/oder das Einschleppen von oberflächenaktiven Substanzen nicht gänzlich ausgeschlossen werden kann.

Bevorzugt werden in Schritt a) 0,1 - 10 Gew.-%, vorzugsweise 0,2 bis 6 Gew.-%, weiterhin vorzugsweise 0,3 bis 4 Gew.-% Farbpigment und 0,1 - 8 Gew.-%, vorzugsweise 0,2 bis 5 Gew.-%, weiterhin vorzugsweise 0,3 bis 3 Gew.-% Bindemittel sowie 82 - 99,8 mindestens eines körnigen und/oder sandigen Füllstoffs jeweils bezogen auf das Gesamtgewicht der Ausgangsstoffe eingesetzt. Der Gewichtsanteil des Farbpigments hängt unter anderem davon ab, wie intensiv bzw. wie dunkel der körnige und/oder sandige Füllstoff und damit die Putzmasse eingefärbt werden sollen. Der Gewichtsanteil des Bindemittels wird bevorzugt so gewählt, dass eine gute Haftung des Farbpigments auf dem körnigen und/oder sandigen Füllstoff erzielt wird.

Es wird angemerkt, dass nicht nur ein körniger und/oder sandiger Füllstoff bzw. eine Füllstoffart, sondern auch unterschiedliche körnige und/oder sandige Füllstoffe enthalten sein können. Unter einem körnigen und/oder sandigen Füllstoff ist daher auch eine Füllstoffmischung zu verstehen. Darüber hinaus muss nicht der gesamte körnige und/oder sandige Füllstoff mit mindestens einem Farbpigment und mindestens einem Bindemittel bzw. mit einer Farbpigment-Bindemittelmischung beschichtet werden. Zur Erzielung der gewünschten Farbgebung kann es genügen, dass nur ein Teil des körnigen und/oder sandigen Füllstoffs mit der Farbpigment-Bindemittelmischung beschichtet wird. Demzufolge kann auch ein unbeschichteter körniger und/oder sandiger Füllstoff enthalten sein, wobei es sich um den gleichen Füllstoff, das heißt die gleiche Füllstoffart, oder einen weiteren Füllstoff handeln kann.

Darüber hinaus kann ein erster Teil des körnigen und/oder sandigen Füllstoffs mit einer ersten Farbpigment-Bindemittelmischung beschichtet werden, während ein weiterer Teil des Füllstoffs mit einer anderen Farbpigment-Bindemittelmischung beschichtet wird. Auf diese Weise kann ebenfalls Einfluss auf die Farbgebung der Putzmasse sowie einer hieraus hergestellten Putzschicht genommen werden.

Bevorzugt werden in Schritt a) polymere Bindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate, umfassend Homo- oder Copolymere von Acrylaten und/oder Methacrylaten, sowie vernetzende Silikonharze verwendet. Besonders bevorzugt werden reaktive polymere Bindemittel auf Epoxid- oder Polyurethan-Basis verwendet. Alternativ oder ergänzend können Wasserglas, insbesondere Kalium-Wasserglas Einsatz finden.

Besonders bevorzugt wird ein auf Polyurethan basierendes Bindemittel eingesetzt. Denn auf Polyurethan basierende Bindemittel sind besonders UV-stabil und damit langlebig, insbesondere im Vergleich mit anderen polymeren Bindemitteln. Im Ergebnis kann so die Haftung des mindestens einen Farbpigments auf dem körnigen und/oder sandigen Füllstoff weiter verbessert werden.

Ferner bevorzugt wird in Schritt a) mindestens ein NIR-reflektierendes Farbpigment, insbesondere mindestens ein NIR-reflektierendes Schwarzpigment, verwendet. "NIR" bezeichnet den nahen Infrarot-Bereich zwischen 780 und 3000 nm. Herkömmliche Farbpigmente, insbesondere sehr dunkle Farbpigmente, absorbieren die NIR-Strahlung und setzen sie in Wärme um. Dies kann zu thermisch induzierten Farbveränderungen bzw. Farbverlusten einer dunkel eingefärbten Putzschicht führen. Bei einer zu starken Erwärmung einer Putzschicht kann es ferner zu Rissen kommen. Auch hinter der Putzschicht angeordnete Schichten, wie beispielsweise eine Wärmedämmschicht, können aufgrund thermisch induzierter Spannungen Schaden nehmen. Durch Verwendung NIR-reflektierender Farbpigmente, insbesondere NIR-reflektierender Schwarzpigmente, kann dem entgegengewirkt werden, so dass die Putzschicht farbstabiler ist. Dies gilt insbesondere für sehr dunkle Putzschichten, insbesondere solche, die einem Hellbezugswert (HBW) < 20 aufweisen.

Der Hellbezugswert (HBW) ist ein Maß für die Helligkeit einer Oberfläche. Er stellt den Reflektionsgrad eines bestimmten Farbtons zwischen dem Schwarzpunkt (0%) und dem Weißpunkt (100%) dar. Der Hellbezugswert gibt dabei an, wie weit der betreffende Farbton vom Schwarz- bzw. Weißpunkt entfernt ist. So sagt beispielsweise ein Hellbezugswert von 85 für einen Farbton aus, dass dieser sehr hell ist. Umgekehrt ist ein Farbton mit einem Hellbezugswert von 15 sehr dunkel. Die einschlägige Norm für den Hellbezugswert ist die DIN 5033-1:2009-05. Zur Bestimmung des Hellbezugswerts kann beispielsweise das Messgerät Data-Color 600 verwendet werden.

Die vorgeschlagene Verwendung NIR-reflektierender Schwarzpigmente ermöglicht die Herstellung einer Putzmasse, die zur Ausbildung einer sehr dunklen Putzschicht geeignet ist, jedoch nicht die üblicherweise mit einer dunklen Putzschicht einhergehenden Nachteile aufweist. Versuche mit körnigen und/oder sandigen Füllstoffen, die mit einer ein NIR-reflektierendes Schwarzpigment enthaltenden Farbpigment-Bindemittelmischung beschichtet worden sind, haben ergeben, dass diese Füllstoffe zwar einen niedrigen HBW haben, das heißt sehr dunkel sind, aber zugleich einen relativ hohen TSR-Wert aufweisen.

Der TSR ("Total Solar Reflectance")-Wert beschreibt das solare Reflexionsvermögen einer pigmentierten Oberfläche. Es handelt sich dabei um den Anteil der Strahlungsenergie der Sonne, der von einer Oberfläche zurückgestrahlt wird. Je höher dieser Wert ist, desto stärker wird die solare Strahlung reflektiert und desto geringer ist der Temperaturanstieg gegenüber der Umgebungstemperatur der auf einer Oberfläche nach Sonneneinstrahlung gemessen werden kann. Ein hoher TSR-Wert steht demnach für eine geringe Aufheizung einer Oberfläche. Die Aufheizung ist reziprok abhängig vom TSR-Wert. Durch gezielte Auswahl von Pigmenten, die im Bereich des Nahen Infrarots (NIR) eine möglichst geringe Absorption zeigen, können bei sehr dunklen Farbtönen niedrigere Oberflächentemperaturen erzielt werden.

Der TSR-Wert korreliert nicht zwingend mit dem HBW, da dieser das Reflexionsverhalten einer Oberfläche gegenüber der gesamten solaren Strahlung nicht wiedergibt. Bei der Bestimmung des HBW wird nur die sichtbare elektromagnetische Strahlung (VIS), nicht aber das NIR berücksichtigt, das über 50% der eingestrahlten Sonnenenergie ausmacht.

Der TSR-Wert einer Oberfläche kann anhand der Norm ASTM G173-03 ermittelt werden. Zur Bestimmung des TSR-Werts kann ein UV-VIS-NIR Spektrophotometer vom Typ Cary 5000 (Firma Agilent Technologies) mit Ulbricht-Kugel (150 mm Integrationskugel) für Messungen mit diffuser Reflexion oder ein Spektrophotometer vom Typ Lambda 950 der Fa. Perkin Elmer mit entsprechender Ulbricht-Kugel verwendet werden.

Die Aufheizung einer Oberfläche ist reziprok abhängig vom TSR-Wert. Durch gezielte Auswahl von Farbpigmenten, die im Bereich des Nahen Infrarots (NIR) eine möglichst geringe Absorption zeigen, können bei sehr dunklen Farbtönen niedrigere Oberflächentemperaturen erzielt und somit der TSR-Wert angehoben werden.

Geeignete NIR-reflektierende Schwarzpigmente sind beispielsweise solche der C.I.-Pigmentklassen P.Br. 29 und P.G. 17. Exemplarisch sind hier als geeignete Vertreter der C.I.-Pigmentklasse P.Br. 29 die Produkte Heucodur IR Black 869 ((Fe,Cr)O3), 910, 940 (Fe(Fe,Cr)2O4) und 945 der Heubach GmbH, die Produkte Black 411A und Black 10P950 der Firma Shepherd, die Produkte AL-41247 und AL-42247 der AL-FARBEN S.A. und das Produkt Sicopal Schwarz L 0095 der BASF SE genannt. Ebenfalls geeignet sind Xfast^{®} Schwarz 0095 und Luconyl^{®} NG Schwarz 0095 der BASF SE. Ferner exemplarisch sind als geeignete Vertreter der C.I.-Pigmentklasse P.G. 17 die Produkte AL-81191 und AL-82191 der AL-FARBEN S.A., die Produkte 24-775 PK, 24-10204 PK, 24-10430, 24-10466 der Ferro Corporation und das Produkt Black 10C909A der Firma Shepherd genannt. Darüber hinaus geeignet sind NIR-reflektierende Schwarzpigmente der C.I.-Pigmentklasse P.Bk. 33, zum Beispiel das Produkt Bayferrox 303T, und/oder der C.I.-Pigmentklasse P.Bk. 30, zum Beispiel die Produkte Heucodur IR Black 950 der Heubach GmbH und Black 376A der Fa. Sheperd. Bei dem vorgeschlagenen Verfahren werden besonders bevorzugt die NIR-reflektierenden Schwarzpigmente Cool Color HS Black V-774 von Ferro und/oder Colanyl Oxidschwarz IR 531 von Clariant eingesetzt.

Ein mit einem NIR-reflektierenden Schwarzpigment beschichteter körniger und/oder sandiger Füllstoff, der einen HBW < 14 und einen TSR-Wert > 10 aufweist, wird nachfolgend als "NIR-Körnung" bezeichnet. Der Vorteil einer NIR-Körnung besteht darin, dass eine hieraus hergestellte Putzmasse die Ausbildung sehr dunkler Putzschichten ermöglicht, die sich jedoch dank der NIR-Körnung weniger stark aufheizen als herkömmliche, dunkel eingefärbte Putzschichten. In der Folge neigt die Putzschicht weniger stark zu Rissbildungen und/oder thermisch induzierten Farbveränderungen.

Zur Herstellung der NIR-Körnung kann wie folgt vorgegangen werden:
Einarbeiten der ausgewählten NIR-reflektierenden Schwarzpigmente in eine Polyurethan-Bindemittelmatrix. Zugeben einer Härterkomponente, so dass ein Bindemittel-Pigment-Härter-Gemisch vorliegt. Der Gehalt an NIR-reflektierenden Schwarzpigmenten im Bindemittel-Pigment-Härter-Gemisch ist dabei durch den geforderten HBW und den geforderten TSR-Wert der herzustellenden NIR-Körnung vorgegeben. Vorlegen des zu beschichtenden körnigen und/oder sandigen Füllstoffs in einem Mischer und Zugeben des Bindemittel-Pigment-Härter-Gemischs unter ständigem Rühren/Umwälzen aller Komponenten im Mischer, bis das Bindemittel-Pigment-Härter-Gemisch auf den Füllstoffen getrocknet bzw. gehärtet ist. Die Trocknung/Härtung kann ggf. auch durch Zugabe von Wärme forciert werden. Das ständige Rühren/Umwälzen stellt eine gleichmäßige Verteilung des Bindemittel-Pigment-Härter-Gemischs auf dem körnigen und/oder sandigen Füllstoff sicher.

Die Bestimmung des HBW und des TSR-Werts von körnigen und/oder sandigen Füllstoffen stellt eine Herausforderung dar, denn es besteht die Gefahr, dass Körner und/oder Sande in die Ulbricht-Kugel fallen. Zur Bestimmung der Werte kann daher alternativ wie folgt vorgegangen werden:
Die hergestellte NIR-Körnung wird mit einer geringen Menge eines Polymerbindemittels versetzt. Bevorzugt werden 95 Gew.-% der NIR-Körnung und 5 Gew.-% einer Polymerbindemitteldispersion (Feststoffgehalt 50%, z.B. Mowilith LDM 1871, Celanese), jeweils bezogen auf das Gesamtgewicht der Ausgangsstoffe für die herzustellende Probe gemischt. Diese Masse kann dann in einer Schichtstärke von 5 mm auf eine Hartfaserplatte aufgezogen und geglättet werden. Nach dem Trocknen ist die Probe ausreichend stabil, um an der Ulbricht-Kugel vermessen zu werden. Versuche mit entsprechenden Proben haben ergeben, dass die geringe Menge an Polymerbindemittel keinen nennenswerten Einfluss auf den HBW und den TSR-Wert hat und somit vernachlässigt werden kann.

Da die im Rahmen der Erfindung vorgeschlagene Färbetechnik den Einsatz herkömmlicher Pigmentpräparationen, insbesondere Pigmentpasten, entbehrlich macht, wird in Weiterbildung der Erfindung vorgeschlagen, dass in Schritt c) des vorgeschlagenen Verfahrens auf die Zugabe einer Pigmentpaste gänzlich verzichtet wird. Dadurch wird die Gefahr minimiert, dass oberflächenaktive Substanzen überhaupt in die Putzmasse gelangen.

Bevorzugt wird in Schritt b) mindestens ein silikatischer und/oder karbonatischer Füllstoff, beispielsweise Quarz, Cristobalit, Calcit, Marmor und/oder Dolomit, mit der Farbpigment-Bindemittelmischung beschichtet. Diese Füllstoffe werden aufgrund ihrer preiswerten Verfügbarkeit traditionell als Körnungen und/oder Sande in Putzbeschichtungen eingesetzt. Die mittlere Partikelgröße (D50-Wert) des Füllstoffs beträgt vorzugsweise 0,3 - 3,0 mm, weiterhin vorzugsweise 0,4 - 2,5 mm. Die Bestimmung des D50-Werts erfolgt bevorzugt nach DIN ISO 9276-1:2004-09 (Darstellung der Ergebnisse von Partikelgrößenanalysen - Teil 1) und ISO 9276-2:2014-05 (Darstellung der Ergebnisse von Partikelgrößenanalysen - Teil 2). Gemäß einer bevorzugten Ausführungsform wird ein körniger und/oder sandiger Füllstoff verwendet, dessen Korngrößen im Bereich von 0,1 mm bis 4,0 mm, vorzugsweise im Bereich von 0,2 mm bis 3,0 mm, liegen, wobei die Korngrößen durch Siebanalyse nach DIN 66165-1:2016-08 ermittelt werden können.

Ferner bevorzugt wird in Schritt c) ein Hydrophobierungsmittel aus der Gruppe der Polysiloxane verwendet, vorzugsweise in Form eines Silikonharzes oder eines Silikonöls, insbesondere eines linearen Silikonöls.

Polysiloxane und Silikonharze sind herkömmliche Hydrophobierungsmittel, die üblicherweise als Dispersion oder Emulsion eingesetzt werden. Um die Wirksubstanzen zu dispergieren bzw. zu emulgieren und/oder deren Zweiphasengemische zu stabilisieren, benötigt man wiederum oberflächenaktive Substanzen. Das heißt, dass auch über das Hydrophobierungsmittel oberflächenaktive Substanzen eingeschleppt werden können. Um dies zu vermeiden, wird bevorzugt ein Silikonöl als Hydrophobierungsmittel eingesetzt, da Silikonöl weder eine Dispersion noch eine Emulsion ist.

Ferner bevorzugt wird ein Silikonöl in reiner Wirkstoffform oder als Lösung aus Lösemittel und Wirkstoff ohne weitere oberflächenaktiven Substanzen verwendet. Das Einschleppen oberflächenaktiver Substanzen über das Hydrophobierungsmittel kann in diesem Fall ausgeschlossen werden.

Silikonöle sind keine gebräuchlichen Hydrophobierungsmittel. Sie werden gelegentlich mit flüssigen Silikonharzen fälschlicherweise gleichgesetzt oder verwechselt. Silikonöle sind überwiegend linear und nur in seltenen Fällen cyclisch aufgebaut, und zwar ausschließlich aus mono- und difunktionalen Einheiten. Das heißt, dass sie keine tri- oder quartärfunktionalen Einheiten wie Silikonharze enthalten, so dass sie nicht über Si-O-Si-Brücken vernetzen können. Silikonöle sind, wie es die Bezeichnung "Öl" schon besagt, bei 20°C/1 bar flüssig bis zähflüssig.

Die Seitengruppen der erfindungsgemäß verwendeten Silikonöle sind weitgehend unpolarer Natur, beispielsweise Hydrocarbyl-Gruppen, können aber vereinzelt reaktive Gruppen, beispielsweise alkylierte Aminogruppen, tragen. Vorzugsweise enthält das Silikonöl hauptsächlich Hydrocarbylseitenketten, z.B. C₁ bis C₂₀ Hydrocarbylseitenketten, noch bevorzugter hauptsächlich Alkylseitenketten, z.B. C₁ bis C₂₀ Alkylseitenketten. Durch die Abwesenheit von polaren Seitenketten weist das Silikonöl stark unpolaren Charakter auf. Normalerweise enthalten die Alkylketten nicht mehr als 5 Kohlenstoffatome. Verzweigte und lineare Polysiloxane mit methyl-, ethyl- oder propyl-Seitenketten sind besonders bevorzugt.

Unter "hauptsächlich unpolare Seitenketten" wird vorliegend verstanden, dass bei der Synthese der Silikonöle keine polaren Seitenketten absichtlich eingeführt werden.

Unter "hauptsächlich Hydrocarbylseitenketten" wird vorliegend verstanden, dass bei der Synthese der Silikonöle keine Seitenketten außer Hydrocarbylseitenketten absichtlich eingeführt werden.

Unter "hauptsächlich Alkylseitenketten" wird vorliegend verstanden, dass bei der Synthese der Silikonöle keine Seitenketten außer Alkylseitenketten absichtlich eingeführt werden. Die Alkylseitenketten können ihrerseits aber vereinzelt reaktive Gruppen, beispielsweise alkylierte Aminogruppen, tragen. Diese reaktiven Gruppen sind aber nicht in der Lage, zu einer zwei- oder dreidimensionalen Vernetzung des Silikonöls zu führen; d.h. diese Gruppen sind reaktiv, aber nicht vernetzend.

Dies gilt analog für C₁ bis C₂₀ Hydrocarbylseitenketten und C₁ bis C₂₀ Alkylseitenketten.

In einer bevorzugten Ausführungsform enthält das Silikonöl ausschließlich Hydrocarbylseitenketten, noch bevorzugter ausschließlich Alkylseitenketten gemäß einer der vorstehend genannten Ausführungsformen.

Das Silikonöl weist vorzugsweise keine Alkoxyseitenketten auf. Die Abwesenheit von Alkoxyseitenketten kann durch Abwesenheit der symmetrischen Si-O-C-Streckschwingung im FTIR-Spektrum (940 bis 970 cm⁻¹) festgestellt werden.

Bevorzugt wird ein Silikonöl mit einem Molekulargewicht von 1000 bis 20 000 g/mol, vorzugsweise von 4000 bis 10 000 g/mol, verwendet.

Ferner bevorzugt wird ein Silikonöl verwendet, das unpolare Seitengruppen, insbesondere C1 bis C 20- Alkylseitenketten, aufweist und besonders bevorzugt Polysiloxane mit Methyl, Ethyl- und/oder Propyl-Seitenketten umfasst. Durch die Abwesenheit von polaren Seitenketten weist das Silikonöl stark unpolaren Charakter auf. Normalerweise enthalten die Alkylketten nicht mehr als 5 Kohlenstoffatome. Verzweigte und lineare Polysiloxane mit Methyl-, Ethyl- und/oder Propyl-Seitenketten sind besonders bevorzugt.

Ferner bevorzugt weist das Silikonöl bei 25°C eine Viskosität von 20 bis 200mPa*s auf, stärker bevorzugt sind 25 bis 160mPa*s., noch bevorzugter 30 bis 140mPa*s. Die Messung der Viskosität erfolgt beispielsweise mit einem Rotationsrheometer Anton Paar Rheolab QC.

In Schritt c) können zusätzlich zum Hydrophobierungsmittel weitere Additive zugegeben werden. Als weitere Additive können beispielsweise rheologische Additive, Verdicker, Topf- und Filmkonservierungsmittel, Filmbindehilfsmittel, Biozide, Entschäumer, Fasern und/oder Lichtschutzmittel verwendet werden. Auf die aktive Zugabe von Netz- und Dispergiermitteln wird aus den bereits genannten Gründen verzichtet.

Des Weiteren bevorzugt wird in Schritt c) ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, verwendet. Besonders bevorzugt werden Copolymere aus Vinylacetat-Ethylen, Acrylsäureester-Acrylnitril, Acryl-/Methacrylsäureester, Styrol-Butylacrylat sowie Acrylat-Homopolymer als Polymerbindemittel verwendet.

Der Gewichtsanteil des in Schritt c) zugegebenen Polymerbindemittels beträgt vorzugsweise 4 - 25 Gew.-%, weiterhin vorzugsweise 5 - 20 Gew.-% und besonders bevorzugt 5 - 15 Gew.-% bezogen auf das Gesamtgewicht der Ausgangsstoffe.

Das Polymerbindemittel liegt zweckmäßigerweise in Form einer wässrigen Bindemitteldispersion vor. Der Feststoffgehalt der wässrigen Bindemitteldispersion beträgt vorzugsweise 30 - 65 Gew.-%, weiterhin vorzugsweise 40 - 62 Gew.-% und besonders bevorzugt 45 - 62 Gew.-% bezogen auf das Gesamtgewicht der Dispersion.

Gemäß einer bevorzugten Ausführungsform der Erfindung werden in Schritt c)

| | |
|---|---|
| 4 - 25 Gew.-% | Polymerbindemittel |
| 10 - 75 Gew.-% | mindestens eines körnigen und/oder sandigen Füllstoffs, der mit mindestens einem Farbpigment und mindestens einem Bindemittel, vorzugsweise mit einer Farbpigment-Bindemittelmischung beschichtet ist |
| 0,1 - 1,0 Gew.-% | Hydrophobierungsmittel |
| 0 - 80 Gew.-% | mindestens eines körnigen und/oder sandigen Füllstoffs, der unbeschichtet ist |
| 0,1 - 5,0 Gew.-% | weitere Additive und |
| 5 - 15 Gew.-% | Wasser |

jeweils bezogen auf das Gesamtgewicht der Ausgangsstoffe gemischt.

Des Weiteren wird die Verwendung einer nach einem erfindungsgemäßen Verfahren hergestellten pastösen Putzmasse zur Ausbildung einer farbigen Putzschicht vorgeschlagen. Eine aus der pastösen Putzmasse hergestellte Putzschicht zeigt keine Tendenz zur Glanzstreifenbildung, was darauf zurückzuführen ist, dass die Putzmasse kaum oberflächenaktive Substanzen enthält, die ausgewaschen werden könnten. Zugleich reduziert das in der Putzmasse enthaltene Hydrophobierungsmittel die Wasseraufnahme der Putzschicht, so dass es zudem an Feuchtigkeit fehlt.

Eine nach einem erfindungsgemäßen Verfahren hergestellte Putzmasse ist demnach insbesondere zur Ausbildung besonders farbintensiver und/oder dunkler Putzschichten geeignet. Beispielsweise ermöglicht die Putzmasse die Herstellung einer Putzschicht, die eine dunkle Farbgebung aufweist, das heißt einen HBW < 20, vorzugsweise < 15, weiterhin vorzugsweise < 12 aufweist und einen TSR-Wert > 10, vorzugsweise > 12, weiterhin vorzugsweise > 15, was unüblich für eine dunkle Putzschicht ist. Diese Werte sind erreichbar, wenn eine NIR-Körnung als Füllstoff verwendet wird.

Darüber hinaus wird eine pastöse Putzmasse zur Ausbildung einer farbigen Putzschicht vorgeschlagen. Die pastöse Putzmasse enthält:

| | |
|---|---|
| 4 - 25 Gew.-% | Polymerbindemittel |
| 10 - 75 Gew.-% | mindestens eines körnigen und/oder sandigen Füllstoffs, der mit mindestens einem Farbpigment und |
| | mindestens einem Bindemittel, vorzugsweise mit einer Farbpigment-Bindemittelmischung, beschichtet ist |
| 0,1 - 1,0 Gew.-% | Hydrophobierungsmittel |
| 0 - 80 Gew.-% | mindestens eines körnigen und/oder sandigen Füllstoffs, der unbeschichtet ist |
| 0,1 - 5,0 Gew.-% | weitere Additive und |
| 5 - 15 Gew.-% | Wasser |

jeweils bezogen auf das Gesamtgewicht der Ausgangsstoffe.

Ferner wird eine farbige Putzschicht vorgeschlagen, die aus einer erfindungsgemäßen pastösen Putzmasse hergestellt ist. Die farbige Putzschicht kann insbesondere eine dunkle Farbgebung aufweisen, das heißt einen HBW < 20, vorzugsweise < 15, weiterhin vorzugsweise < 12 aufweisen und einen TSR-Wert > 10, vorzugsweise > 12, weiterhin vorzugsweise > 15, was unüblich für eine dunkle Putzschicht ist.

Anhand eines konkreten Ausführungsbeispiels werden nachfolgend die Vorteile der Erfindung aufgezeigt. Das Ausführungsbeispiel betrifft eine erfindungsgemäße pastöse Putzmasse zur Herstellung einer farbigen Putzschicht.

### Ausführungsbeispiel (erfindungsgemäß)

| | | |
|---|---|---|
| 17,0 | Gew.-% | Polymerbindemittel (Polymerdispersion, Feststoff ca. 50%) |
| 73,0 | Gew.-% | NIR-Körnung (CaCO3), 1,2-2,5 mm |
| 0,2 | Gew.-% | Hydrophobierungsmittel (Silikonöl) |
| 0,8 | Gew.-% | weitere Additive (Rheologieadditive, Entschäumer, Biozide, etc.) |
| 9,0 | Gew.-% | Wasser |
| 100 | Gew.-% | |

Zur Herstellung der NIR-Körnung wurde das weiter oben beschriebene Verfahren eingesetzt, wobei 50 Gew.-% NIR-reflektierende Schwarzpigmente sowie 50 Gew.-% eines auf Polyurethan basierenden Polymerbindemittels jeweils bezogen auf das Gesamtgewicht der Ausgangsstoffe der Farbpigment-Bindemittelmischung verwendet wurden. Zur Herstellung der Farbpigment-Bindemittelmischung wurden die NIR-reflektierenden Schwarzpigmente in das Polymerbindemittel eingearbeitet. Dann wurden 97 Gew.-% des zu beschichtenden körnigen und/oder sandigen Füllstoffs in einem Mischer vorgelegt und 3 Gew.-% der Farbpigment-Bindemittelmischung, jeweils bezogen auf das Gesamtgewicht der Ausgangsstoffe zur Herstellung der NIR-Körnung, unter ständigem Rühren/Umwälzen aller Komponenten im Mischer zugegeben. Nach dem Trocknen bzw. Härten der Farbpigment-Bindemittelmischung konnte die fertige NIR-Körnung dem Mischer entnommen werden.

### Referenzbeispiel (nicht erfindungsgemäß)

| | | |
|---|---|---|
| 17,0 | Gew.-% | Polymerbindemittel (Polymerdispersion, Feststoff ca. 50%) |
| 63,0 | Gew.-% | Körnung (CaCO3), 1,2-2,5 mm |
| 10,0 | Gew.-% | Farbpigment (Pigmentpaste) |
| 1,5 | Gew.-% | weitere Additive (Rheologieadditive, Entschäumer, Biozide, Netz-/Dispergiermittel, etc.) |
| 8,5 | Gew.-% | Wasser |
| 100 | Gew.-% | |

Aus den beiden angegebenen Rezepturen wurde anschließend jeweils eine Putzschicht ausgebildet und hinsichtlich ihrer Neigung zur Glanzstreifenbildung labortechnisch untersucht. Bei der Untersuchung wurde die Methode "Standard Pratice to Evaluate Leaching of Water Soluble Materials from Latex Paint Films" ASTM, D7190-10 (2011) angewandt. Die Ergebnisse der Untersuchung zeigten, dass die aus der erfindungsgemäßen Putzmasse hergestellte Putzschicht eine deutlich geringere Neigung zur Glanzstreifenbildung bzw. zum Leaching zeigte, wobei Leaching der englische Begriff für das Auswaschen oberflächenaktiver Substanzen ist, welches wiederum die Ursache für die Glanzstreifenbildung ist.

## Patentansprüche

1. Verfahren zur Herstellung einer mindestens ein Farbpigment enthaltenden pastösen Putzmasse, umfassend die Schritte
a) Bereitstellen mindestens eines körnigen und/oder sandigen Füllstoffs und Beschichten zumindest eines Teils des körnigen und/oder sandigen Füllstoffs mit mindestens einem Farbpigment und mindestens einem Bindemittel,
b) Trocknen und/oder Härten der Farbpigment-Bindemittelbeschichtung auf dem Füllstoff,
c) Mischen des gesamten Füllstoffs mit mindestens einem Polymerbindemittel, mindestens einem Hydrophobierungsmittel, weiteren Additiven und Wasser.

2. Verfahren nach Anspruch 1,
**dadurch gekennzeichnet, dass** vor Schritt a) das mindestens eine Farbpigment und das mindestens eine Bindemittel gemischt werden und in Schritt a) als Farbpigment-Bindemittelmischung auf zumindest einen Teil des körnigen und/oder sandigen Füllstoffs aufgebracht werden.

3. Verfahren nach Anspruch 1 oder 2,
**dadurch gekennzeichnet, dass** in Schritt a) 0,1 bis 10 Gew.-%, vorzugsweise 0,2 bis 6 Gew.-%, weiterhin vorzugsweise 0,3 bis 4 Gew.-%Farbpigment und 0,1 bis 8 Gew.-%, vorzugsweise 0,2 bis 5 Gew.-%, weiterhin vorzugsweise 0,3 bis 3 Gew.-% Bindemittel sowie 82 bis 99,8 Gew.-% körnige und/oder sandige Füllstoff jeweils bezogen auf das Gesamtgewicht der Ausgangsstoffe eingesetzt werden.

4. Verfahren nach einem der Ansprüche 1 bis 3,
**dadurch gekennzeichnet, dass** in Schritt a) polymere Bindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate, umfassend Homo- oder Copolymere von Acrylaten und/oder Methacrylaten, sowie vernetzende Silikonharze verwendet werden, wobei besonders bevorzugt reaktive polymere Bindemittel auf Epoxid- oder Polyurethan-Basis und/oder Wasserglas, insbesondere Kalium-Wasserglas, verwendet werden.

5. Verfahren nach einem der vorhergehenden Ansprüche,
**dadurch gekennzeichnet, dass** in Schritt a) mindestens ein NIR-reflektierendes Farbpigment, insbesondere mindestens ein NIR-reflektierendes Schwarzpigment, verwendet wird.

6. Verfahren nach einem der vorhergehenden Ansprüche,
**dadurch gekennzeichnet, dass** in Schritt c) auf die Zugabe einer Pigmentpaste gänzlich verzichtet wird.

7. Verfahren nach einem der vorhergehenden Ansprüche,
**dadurch gekennzeichnet, dass** in Schritt b) mindestens ein silikatischer und/oder karbonatischer Füllstoff mit dem mindestens einen Farbpigment und dem mindestens einem Bindemittel beschichtet wird, wobei vorzugsweise die mittlere Partikelgröße (D50) des Füllstoffs 0,3 - 3,0 mm, weiterhin vorzugsweise 0,4 - 2,5 mm, beträgt und/oder die Korngrößen im Bereich von 0,1 mm bis 4,0 mm, vorzugsweise im Bereich von 0,2 mm bis 3,0 mm, liegen.

8. Verfahren nach einem der vorhergehenden Ansprüche,
**dadurch gekennzeichnet, dass** in Schritt c) ein Hydrophobierungsmittel aus der Gruppe der Polysiloxane verwendet wird, vorzugsweise in Form eines Silikonharzes oder eines Silikonöls, insbesondere eines linearen Silikonöls.

9. Verfahren nach Anspruch 8,
**dadurch gekennzeichnet, dass** ein Silikonöl in reiner Wirkstoffform oder als Lösung aus Lösemittel und Wirkstoff ohne weitere oberflächenaktiven Substanzen verwendet wird.

10. Verfahren nach Anspruch 8 oder 9,
**dadurch gekennzeichnet, dass** ein Silikonöl mit einem Molekulargewicht von 1000 bis 20 000 g/mol, vorzugsweise von 4000 bis 10 000 g/mol, verwendet wird, das weiterhin vorzugsweise unpolare Seitengruppen, insbesondere C1 bis C 20-- Alkylseitenketten, aufweist und besonders bevorzugt Polysiloxane mit Methyl, Ethyl- und/oder Propyl-Seitenketten umfasst.

11. Verfahren nach einem der vorhergehenden Ansprüche,
**dadurch gekennzeichnet, dass** in Schritt c) rheologische Additive, Verdicker, Topf- und Filmkonservierungsmittel, Filmbindehilfsmittel, Biozide, Entschäumer, Fasern und/oder Lichtschutzmittel als weitere Additive verwendet werden.

12. Verfahren nach einem der vorhergehenden Ansprüche,
**dadurch gekennzeichnet, dass** in Schritt c) ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, gegebenenfalls mit Acryl- und/oder Methacrylsäure als Comonomerbaustein, verwendet wird, wobei vorzugsweise 4 - 25 Gew.-%, weiterhin vorzugsweise 5 - 20 Gew.-%, besonders bevorzugt 5 - 15 Gew.-% Polymerbindemittel bezogen auf das Gesamtgesicht der Ausgangsstoffe zugegeben werden.

13. Verfahren nach einem der vorhergehenden Ansprüche,
**dadurch gekennzeichnet, dass** in Schritt c)
| | |
|---|---|
| 4 - 25 Gew.-% | Polymerbindemittel |
| 10 - 75 Gew.-% | mindestens eines körnigen und/oder sandigen Füllstoffs, der mit mindestens einem Farbpigment und mindestens einem Bindemittel, vorzugsweise mit einer Farbpigment-Bindemittelmischung beschichtet ist |
| 0,1 - 1,0 Gew.-% | Hydrophobierungsmittel |
| 0 - 80 Gew.-% | mindestens eines körnigen und/oder sandigen Füllstoffs, der unbeschichtet ist |
| 0,1 - 5,0 Gew.-% | weitere Additive und |
| 5 - 15 Gew.-% | Wasser |
jeweils bezogen auf das Gesamtgewicht der Ausgangsstoffe gemischt werden.

14. Verwendung einer nach einem Verfahren nach einem der vorhergehenden Ansprüche hergestellten pastösen Putzmasse zur Ausbildung einer farbigen Putzschicht, vorzugsweise einer farbigen Putzschicht mit einem HBW < 20 und einem TSR-Wert > 10.

15. Pastöse Putzmasse zur Ausbildung einer farbigen Putzschicht, enthaltend
| | |
|---|---|
| 4 - 25 Gew.-% | Polymerbindemittel |
| 10 - 75 Gew.-% | mindestens eines körnigen und/oder sandigen Füllstoffs, der mit mindestens einem Farbpigment und mindestens einem Bindemittel, vorzugsweise mit einer Farbpigment-Bindemittelmischung, beschichtet ist |
| 0,1 - 1,0 Gew.-% | Hydrophobierungsmittel |
| 0 - 80 Gew.-% | mindestens eines körnigen und/oder sandigen Füllstoffs, der unbeschichtet ist |
| 0,1 - 5,0 Gew.-% | weitere Additive und |
| 5 - 15 Gew.-% | Wasser |
jeweils bezogen auf das Gesamtgewicht der Ausgangsstoffe.

16. Farbige Putzschicht, die aus der pastösen Putzmasse nach Anspruch 13 hergestellt ist.
